# EUROPÄISCHE PATENTSCHRIFT

(11) **EP 2 801 729 B1**
(45) Veröffentlichungstag und Bekanntmachung des Hinweises auf die Patenterteilung: **03.01.2018**
(21) Anmeldenummer: 14001565.2
(22) Anmeldetag: 05.05.2014
(51) Int. Cl.: F16C 41/00, F16C 19/52, F16C 25/08, F16C 19/54, F16C 35/06

(54) **Großlager, insbesondere Hauptlager einer Windkraftanlage sowie Verfahren zur Ermittlung eines Lagerspiels eines Wälzlagers und Windkraftanlage**
Main bearing, in particular main bearing of a wind turbine and method for determining a bearing clearance of a roller bearing and wind turbine
Grand palier, en particulier palier principal d'une éolienne et procédé de détermination d'un jeu de palier d'un palier à roulement et éolienne

(30) Priorität: 06.05.2013 DE 102013007643
(43) Veröffentlichungstag der Anmeldung: 12.11.2014
(73) Patentinhaber: Eolotec GmbH, 90429 Nürnberg (DE)
(72) Erfinder: Reichhart, Marc, DE - 90763 Fürth (DE)
(74) Vertreter: FDST Patentanwälte

(56) Entgegenhaltungen:
- DE-A1-102007 051 237
- DE-A1-102008 034 484
- DE-A1-102009 051 498
- DE-A1-102010 035 264
- DE-A1-102011 082 934

## Beschreibung

Die Erfindung betrifft ein Großlager, insbesondere ein Hauptlager einer Windkraftanlage, mit einem Rotor sowie mit einem Stator, die über zumindest ein Wälzlager aneinander gelagert sind, wobei zwei Bauteile in Abhängigkeit eines Lagerspiels des Wälzlagers relativ zueinander positioniert sind. Die Erfindung betrifft weiterhin ein Verfahren zur Ermittlung eines Lagerspiels eines Wälzlagers bei einem derartigen Großlager.

Ein derartiges als Hauptlagereinheit für eine Windkraftanlage ausgebildetes Großlager ist beispielsweise aus der WO 2013/113487 A1 oder der WO 2013/152850 A1 zu entnehmen.

Horizontale Windkraftanlagen weisen allgemein einen Turm auf, an dessen Kopfende eine drehbare Gondel angeordnet ist, die einen Maschinenträger bildet. An der Gondel ist eine Rotonabe um eine horizontal verlaufende Rotationsachse drehbar gelagert, an der Rotorblätter befestigt sind. Für diese Lagerung der Rotornabe am Maschinenträger ist die Hauptlagereinheit vorgesehen. Die Hauptlagereinheit weist dabei üblicherweise einen Rotor sowie einen Stator auf. Häufig wird der Rotor auch als Welle und der Stator auch als Gehäuse bezeichnet. Die in den genannten Dokumenten zum Stand der Technik beschriebenen Hauptlagereinheiten weisen jeweils zwei in Richtung der Rotationsachse zueinander beabstandete Wälzlager auf, über die der Rotor am Stator gelagert ist. Über die beiden Wälzlager, den Rotor sowie den Stator ist hierbei ein Vorspannkreis ausgebildet. Einer der Lagerringe der Wälzlager ist hierbei mit Hilfe eines Vorspannrings zur Erzeugung der Vorspannung und zur Ausbildung des Vorspannkreises gegen die weiteren Bauteile verspannbar.

Neben horizontalen Windkraftanlagen sind auch sogenannte vertikale Windkraftanlagen bekannt, bei denen die Rotationsachse in vertikaler Richtung verläuft. Für derartige vertikale Windkraftanlagen lasse sich ebenfalls Hauptlagereinheiten verwenden, die nach dem gleichen Prinzip wie die aus der WO 2013/113487 A1 oder der WO 2013/152850 A1 bekannten ausgebildet sind, lediglich mit einer vertikalen Ausrichtung.

Derartige Hauptlagereinheiten weisen typischerweise einen Durchmesser von mehreren Metern, beispielsweise im Bereich von bis zu 5 m bei einer Länge von ebenfalls mehreren Metern auf. Je nach Ausgestaltung kann dabei der Stator oder der Rotor das zur Rotationsachse orientierte innen liegende Bauteil bilden. Dieses ist typischerweise als Hohlbauteil ausgebildet und begehbar.

Unter Großlager werden vorliegend allgemein Lager verstanden, die für hohe Traglasten beispielsweise von mehreren Tonnen ausgebildet sind und typischerweise einen Durchmesser >0,5 m und insbesondere >2 m aufweisen.

Die in dem genannten Stand der Technik beschriebene Hauptlagereinheit ist als vorgefertigte Baueinheit ausgeführt, welche als solche vor Ort an die Baustelle als vorgespanntes Hauptlager geliefert werden kann und dann nur noch mit der Rotornabe bzw. dem Maschinenträger verbunden werden muss.

Bei Wälzlagerungen insbesondere bei derartigen Großlagern spielt die genaue Einstellung eines Lagerspiels bei Montage und ein passendes Lagerspiel im laufenden Betrieb (Betriebsspiel) eine große Rolle für die Funktion. Unter Lagerspiel wird dabei allgemein ein Abstand zweier Lagerpartner voneinander verstanden, insbesondere der Abstand der Wälzkörper zu den ihnen zugeordneten Laufbahnen, an denen sie sich abwälzen. Weiterhin wird in diesem Zusammenhang unterschieden zwischen einem positiven Lagerspiel und einem negativen Lagerspiel. Beim positiven Lagerspiel besteht zwischen den Lagerpartnern ein Luftspalt, die so genannte Lagerluft. Beim negativen Spiel sind die einzelnen Lagerpartner mit einer Vorspannung gegeneinander verspannt. Treten hier ungewollte Abweichungen auf, besteht die Gefahr von vorzeitigen Lagerausfällen.

Deshalb muss zum einen das Lagerspiel bei der Montage sehr genau eingestellt werden. Dabei spielen vor allem die Toleranzabweichungen der Lager und Lagersitze, die Temperaturen, die Rauigkeiten, die Reibung in den Lagersitzen und die Umgebungssteifigkeiten eine große Rolle und müssen berücksichtigt werden.

Des Weiteren muss zum Anderen die Änderung des Lagerspiels während des Betriebs (Betriebsspiel) berücksichtigt werden. Hier wirken sich z.B. Temperaturänderungen, Verschleiß in den Lagern und in den Lagersitzen, Wachsen von Lagerringen oder Vorspannungsverluste von Verschraubungen oder Vorspannelementen aus.

Insbesondere bei sehr großen Lagern wie sie z.B. in Windkraftanlagen vorkommen ist die exakte Einstellung des Lagerspiels bei der Montage schwierig zu realisieren. Auch die starken Temperaturänderungen im Betrieb, die elastische Umgebung und der Verschleiß der Lager wirken sich bei solchen Lagerungen besonders stark auf das Betriebsspiel aus. Weiterhin ist bei solchen großen Lagern die erreichbare Pressung im Lagersitz niedriger als bei kleinen Lagern. Dies liegt daran, dass das Verhältnis von Lagerquerschnitt zum Durchmesser deutlich geringer ist. Dadurch können in ungünstigen Fällen die Lagerringe wandern, was zu Passungsrost und Verschleiß in den Lagersitzen führen kann.

Aus der DE 10 2007 051 237 A1 ein Verfahren zur Einstellung des Lagerspiels oder der Vorspannung einer Wälzlageranordnung zu entnehmen, wobei hierzu die Drehung von Wälzkörpern erfasst und auf Grundlage dieser Messung auf ein Lagerspiel zurückgeschlossen wird. Dies beruht auf der Erkenntnis, dass nur bei einem korrekten Lagerspiel ein definiertes Abrollen der Wälzkörper erfolgt.

Aus der DE 10 2010 035 264 A1 ist weiterhin eine Vorrichtung zur Axialspieleinstellung zu entnehmen, bei dem ein zuvor festgelegtes optimales Lagerspiel überprüft und bei Bedarf mit Hilfe eines Piezoaktuators nachjustiert wird.

Ausgehend hiervon liegt der Erfindung die Aufgabe zu Grunde, bei einem Großlager einen zuverlässigen Betrieb zu gewährleisten.

Die Aufgabe wird erfindungsgemäß gelöst durch ein Großlager, insbesondere ein Hauptlager einer Windkraftanlage, welches einen Rotor sowie einen Stator aufweist, die über zumindest ein Wälzlager aneinander gelagert sind. Zwei (Lager-) Bauteile sind dabei in Abhängigkeit eines Lagerspiels relativ zueinander positioniert. Weiterhin ist nunmehr eine Sensoreinheit vorgesehen, welche einen in das Großlager integrierten Sensor aufweist, welcher an einem der beiden relativ zueinander positionierten Bauteile angeordnet ist. Der Sensor dient zur Messung eines Abstands zwischen diesen beiden Bauteilen. Weiterhin ist die Sensoreinheit zur Ermittlung des Lagerspiels basierend auf den gemessenen Abstand ausgebildet. Der zumindest eine Sensor ist allgemein an dem einen Bauteil befestigt, z.B. durch Schrauben, Kleben, Löten, Stecken, Klemmen etc.

Durch die unmittelbare Integration des Sensors in das Großlager und die Anordnung an einem der beiden relativ zueinander positionierbaren Bauteile wird sowohl bei der Montage als auch während des Betriebes eine Messung des Abstands zwischen den beiden Bauteilen ermöglicht. Bei den beiden Bauteilen handelt es sich allgemein um Lagerbauteile des Großlagers insbesondere in unmittelbarer Nähe des Wälzlagers oder auch um Lagerbauteile des Wälzlagers selbst. Die Position des Sensors und die Bauteile, zwischen denen der Abstand gemessen wird, sind dabei derart gewählt, dass aus deren Abstand ein Rückschluss auf das tatsächliche Lagerspiel des Wälzlagers gezogen werden kann.

Grundsätzlich besteht die Möglichkeit, über den Sensor direkt die Relativposition zweier Lagerbauteile des Wälzlagers, beispielsweise die relative Lage der zwei Lagerringe oder auch die der Lagersitze des Wälzlagers zu messen. Alternativ ist eine eher mittelbare Messung vorgesehen, beispielsweise indem die Relativposition des Stators zum Rotor im Bereich des Wälzlagers gemessen wird. In allen Fällen ist aus dem gemessenen Abstand ein Rückschluss auf das tatsächliche Lagerspiel ermöglicht. Bei dem gemessenen Abstand handelt es sich dabei vorzugsweise um einen Axialabstand parallel zur Rotationsachse, um die das Wälzlager rotiert. Alternativ oder ergänzend handelt es sich bei dem Abstand auch um einen Radialabstand senkrecht zur Rotationsachse.

Durch die Integration des Sensors wird in effektiver Weise die Möglichkeit geschaffen, sowohl bei der Montage des Großlagers als auch beim Betrieb das Lagerspiels zu ermitteln und zu überwachen. Dadurch ist eine exakte Einstellung des Lagerspiels möglich. Darüber hinaus können ungünstige Änderungen im Betrieb frühzeitig erkannt werden. Vorzugsweise werden in diesem Fall dann geeignete Maßnahmen zur Verhinderung von Lagerschäden ergriffen. Beispielsweise erfolgt eine Nachspannung des Lagers oder es wird zumindest eine Fehlermeldung ausgegeben, so dass im Zweifel die Last vom Lager genommen werden kann. Insgesamt werden daher durch die Integration des Sensors während des Betriebs auftretende Veränderungen am Lager, insbesondere Verschleiß, Verformung etc. der einzelnen Lagerpartner, beispielsweise der Lagerringe, der Wälzlager oder auch der Lagersitze überwacht und frühzeitig erkannt.

Diese Überwachung lässt sich grundsätzlich auf unterschiedlichste Lagertypen anwenden. Nachfolgend wird das grundlegende Konzept anhand des Beispiels einer angestellten und vorgespannten Kegelrollenlagerung in O-Anordnung beschrieben.

In zweckdienlicher Ausgestaltung umfasst die Sensoreinheit eine Auswerteeinheit, welche derart ausgebildet ist, dass in Abhängigkeit des gemessenen Abstands eine Lagervorspannung bestimmt wird. Über den gemessenen Abstand wird daher mittelbar eine eingestellte Vorspannung gemessen. Dies ist insbesondere bei vorgespannten Großlagern von entscheidender Bedeutung.

Diese Ausgestaltung macht sich den Effekt zu Nutze, dass die einzelnen Lagerpartner an so genannten Wälzkörperkontakten unter Belastung, also unter Vorspannung einfedern. Das Wälzlager weist üblicherweise einen Außenring sowie einen Innenring und dazwischen angeordnete Wälzkörper auf. Die Lagerringe stützen sich dabei üblicherweise an Lagersitzen ab, die am Rotor bzw. am Stator, ausgebildet sind. Unter Vorspannung weiten sich die Außenringe durch die Nachgiebigkeit des Stators auf und die Innenringe schnüren sich ein. Dadurch kommt es zu einer Abstandsänderung von Außen- und Innenring zueinander sowohl in axialer als auch in radialer Richtung. Es besteht daher eine Korrelation zwischen dem Abstand der Lagerpartner und der aufgebrachten Vorspannung. Dies wird zur indirekten Ermittlung der Vorspannung über die Abstandsmessung ausgenutzt.

In der Auswerteeinheit ist eine Zuordnung beispielsweise in Form einer Tabelle hinterlegt oder ein entsprechender Algorithmus, so dass zuverlässig und schnell die zum gemessenen Abstand zugehörige Lagervorspannung ermittelt werden kann.

Zweckdienlicherweise wird hierzu auf eine FEM-Berechnung zurückgegriffen, mittels der die Abhängigkeit einer solchen Abstandsänderung (Ringverschiebung) von der Vorspannung sehr genau bestimmt werden kann. Durch das Messen z.B. der axialen Relativverschiebung der Lagerringe zueinander kann also die Vorspannung im Lagersystem bestimmt werden.

Die Messung des Abstands und damit einer Verschiebung erfolgt vorzugsweise berührungslos, beispielsweise mittels induktiver Sensoren. Die Messung erfolgt daher zwischen dem Sensor und einer von diesem um einen Messspalt beabstandeten Messfläche. Berührungslose Sensoren, insbesondere induktive Sensoren weisen eine hohe Messgenauigkeit auf und die Messwerte werden durch Öl und Fett im Messspalt nicht verfälscht. Es sind aber auch andere bekannte Messverfahren wie beispielsweise optische Abstandsmessung (Lasermessung), berührende Messung (Messuhr) oder kapazitive Messung möglich.

Der Sensor ist gegenüberliegend zur Messfläche angeordnet. Dabei ist die Messfläche und wahlweise der Sensor an einem der beiden Bauteile Rotor oder Stator angeordnet. Grundsätzlich braucht daher keine direkte Messung des Abstands und damit der Verschiebung zwischen den beiden Lagerringen erfolgen. Es ist daher auch eine indirekte Messung dieses Abstands zwischen den Lagerringen ermöglicht. Dabei können unterschiedliche Anordnungen zwischen Sensor und Messfläche vorgesehen sein. So wird beispielsweise der Abstand zwischen dem Gehäuse (Stator) und einem der Lagerringe, zwischen dem Rotor und einem der Lagerringe, zwischen Stator und Rotor oder auch zwischen den beiden Lagerringen gemessen. Dabei ist jeweils die Messfläche an dem einen Bauteil und der Sensor an dem anderen Bauteil angeordnet bzw. mit diesem mechanisch verbunden.

Der Sensor ist dabei vorzugsweise derart angeordnet, dass ein axialer Abstand erfasst wird. Alternativ ist er derart angeordnet, dass ein radialer Abstand ermittelt wird. Zweckdienlicherweise ist er weiterhin derart angeordnet, dass er sowohl einen radialen als auch einen axialen Abstand erfasst. Insofern misst er daher in zwei Richtungen zu zwei Messflächen. Ob eher die axiale oder eher die radiale Messung vorteilhaft ist, hängt von der Lagerart ab und ob die Lagerung negatives oder positives Lagerspiel hat. Im Fall von erhöhten Anforderungen an die Messgenauigkeit, ist es vorteilhaft, sowohl die axiale als auch die radiale Verschiebung zu messen.

In besonders zweckdienlicher Ausgestaltung ist der Sensor zwischen zwei Bauteilen, beispielsweise zwischen dem Stator und einem Lagerring angeordnet, insbesondere am Rotor angeordnet, so dass er beispielsweise gleichzeitig den Axialabstand zwischen Rotor und Gehäuse sowie Rotor und Lagerring für eine besonders genaue Abstandsbestimmung ermittelt. Bei der Anordnung des Sensors am Rotor / Stator oder der Messfläche am Rotor / Stator ist die Messfläche bzw. der Sensor jeweils vorzugsweise in der Nähe des jeweiligen am Rotor / Stator ausgebildeten Lagersitzes positioniert. Unter nahe am Lagersitz oder allgemein nahe am Wälzlager wird hierbei ein Abstand von allenfalls einigen Zentimetern verstanden.

Die indirekte Messung des Abstands zwischen den Lagerringen setzt allerdings voraus, dass die Lagerringe in axialer Richtung innerhalb des Lagersitzes fixiert sind und sich nicht verschieben können. In diesem Fall ist die Abstandsmessung zwischen Rotor und Stator indirekt ermöglicht.

Besteht die Möglichkeit, dass sich der Lagerring relativ zum Rotor / Stator axial verschieben kann, ist es vorteilhaft, auch die Relativverschiebung des Lagerrings zur Welle zu messen und für die Auswertung und Bestimmung des Lagerspiels z berücksichtigen.

Zur Bestimmung des Lagerspiels, insbesondere der Vorspannung ist es grundsätzlich ausreichend, die Verschiebung in oder bei einem der beiden Lager zu messen. Aus Genauigkeitsgründen ist es allerdings von Vorteil die Verschiebungen beider Lager zu messen.

Vorteilhafterweise werden eine Vielzahl von Sensoren über den Umfang des Wälzlagers verteilt positioniert. Die Sensoren müssen dabei nicht zwangsweise direkt am Wälzlager befestigt sein. Vielmehr können sie auch in der Nähe des Wälzlagers beispielweise am Rotor und/oder Stator angebracht sein. Dabei sind die Sensoren bevorzugt gleichmäßig über dem Umfang verteilt, oder - falls keine Rotationssymmetrie der Lagerumgebung vorliegt - auch ungleichmäßig.

In bevorzugter Ausgestaltung ist der Sensor austauschbar in einer Aufnahme, insbesondere einer Gewindeaufnahme befestigt. Der zumindest eine Sensor ist daher in einfacher Weise an der vorgesehenen Position einsetzbar. Durch die leichte Austauschbarkeit besteht die Möglichkeit, defekte Sensoren auszutauschen. Bevorzugt ist bei einer Vielzahl von Sensoren jeder der Sensoren austauschbar befestigt.

Bevorzugt ist weiterhin einem jeweiligen Sensor eine Einstelleinrichtung zugeordnet, über die die Position des Sensors bezüglich der Messfläche einstellbar ist. Hierdurch kann der Sensor optimal bezüglich der Messfläche positioniert werden, um den Sensor in seinem optimalen Messbereich betreiben zu können. Zweckdienlicherweise umfasst dabei die Einstelleinrichtung insbesondere ein Exzenterelement, so dass der Sensor durch Drehen des Exzenterelements in seiner Position verstellbar ist, also in Richtung zur Messfläche hin oder von dieser weg über einen gewissen Verstellbereich verstellt werden kann.

In einer vorteilhaften Weiterbildung ist die Sensoreinheit zur Überwachung eines so genannten Ringwanderns ausgebildet, bei dem sich also der Lagerring innerhalb seines Lagersitzes bewegt. Dazu sind vorzugsweise auf der Messfläche des zu überwachenden Lagerrings Markierungen angebracht. Dadurch wird das Wandern des Lagerrings erfasst. Im Fall einer induktiven Abstandsmessung sind als Markierungen Vertiefungen oder Erhöhungen von Vorteil. Bewegt sich durch Ringwandern eine Markierung am Sensor vorbei wird dies durch die Abstandsmessung erfasst. Vorteilhafterweise sind auf der Messfläche eine Vielzahl von Markierungen angebracht. Bei den Markierungen kann es sich im Falle anderer Sensortypen auch um optische Marken, Oberflächenveränderung oder Ähnliches handeln.

Bevorzugt wird eine Axialverschiebung des Lagerrings im Lagersitz durch die Sensoreinheit überwacht. Treten Änderungen über die Betriebsdauer auf, deutet dies auf negative Veränderungen im Lagersitz hin, die beispielsweise durch den so genannten Passungsrost oder durch Verschleiß hervorgerufen sind.

Da das Lagerspiel insbesondere im Betrieb aber auch bei der Montage unter anderem bestimmt wird durch Umgebungsparameter, insbesondere die Umgebungstemperatur aber auch die Temperatur der Bauteile selbst sowie Betriebslasten, beispielsweise Windlasten etc., ist in zweckdienlicher Ausgestaltung die Sensoreinheit auch zur Berücksichtigung von Umgebungsparametern, insbesondere von Temperaturen oder von Windlasten ausgebildet. Weiterhin ist sie dahingehend ausgebildet, dass die gemessenen Werte derartiger Umgebungsparameter in die Bestimmung und die Ermittlung des Lagerspiels mit einfließen. Insbesondere wird dabei eine Temperaturverteilung innerhalb des Lagers berücksichtigt, da eine solche einen großen Einfluss sowohl auf das Betriebsspiel des Lagers als auch auf die Messgenauigkeit hat. Diese Temperaturverteilung wird also für die Auswertung des gemessenen Abstands berücksichtigt.

Soll lediglich das Lagerspiel bei der Montage gemessen werden, so genügen beispielsweise die Erfassung des Abstands sowie die der aktuellen Temperatur. Soll bei der Montage ein positives Lagerspiel eingestellt werden, also ein Luftspalt zwischen den einzelnen Lagerpartnern, so wird zweckdienlicherweise der Rotor (Welle) hin und her bewegt, um den möglichen Verschiebeweg zunächst zu messen und dann den gewünschten Abstand einzustellen.

Um das Lagerspiel während des Betriebs, also das so genannte Betriebsspiel, zu messen und insbesondere zu überwachen ist in zweckdienlicher Ausgestaltung die Sensoreinheit zur dauerhaften Abstandsmessung während des laufenden Betriebs des Lagers ausgebildet. Unter dauerhaft wird hierbei nicht zwingend ein kontinuierliches, ununterbrochenes Messen verstanden. Allgemein wird unter einem dauerhaften Messen zumindest ein wiederholtes Messen in vorbestimmten Zeitabständen während des laufenden Betriebs verstanden. Durch die Integration des Sensors in das Lager selbst ist dies ohne Weiteres möglich. Zweckdienlicherweise wird hierdurch ein Monitoring des Betriebs insbesondere des Betriebsspiels durchgeführt.

Vorzugsweise sind in der Sensoreinheit weiterhin Referenzwerte für die Abstandswerte hinterlegt, mit denen die gemessenen Abstandswerte verglichen werden. Weichen die gemessenen Abstandswerte von den hinterlegten Referenzwerten unter Berücksichtigung eines zulässigen Toleranzbereichs ab, so wird dies als ein unzulässiger Betriebszustand gewertet und es werden entsprechende Maßnahmen, insbesondere die Ausgabe eines Fehlersignals eingeleitet.

In bevorzugter Ausgestaltung ist allgemein vorgesehen, dass die Sensoreinheit zur Erfassung der während des laufenden Betriebs auftretenden äußeren Belastungen ausgebildet ist und diese bei der Ermittlung des Lagerspiels berücksichtigt. Dies ist insbesondere von besonderer Bedeutung, um eine eventuelle Abweichung von einem Sollwert richtig beurteilen zu können. Bei kurzfristigen Lastspitzen, beispielsweise bei einer hohen Windlast oder auch bei erhöhten Temperaturen, kann es zu Abweichungen zu statischen Referenzwerten kommen. Die Referenzwerte sind daher bevorzugt für unterschiedliche Belastungssituationen hinterlegt, so dass die zulässigen Werte für eine jeweilige Belastungssituation ermittelt und überprüft werden können. Für die Abstandswerte werden dabei insbesondere Mittelwerte der mehreren Sensoren herangezogen.

Für den Fall, dass die Änderung des Betriebsspiels über der Betriebsdauer der Lagerung überwacht werden soll, muss also allgemein unterschieden werden, ob die Lagerung von den äußeren Betriebslasten entlastet werden kann. Ist dies möglich, können die Abstands-Messwerte einfach mit Messwerten aus der Vergangenheit verglichen werden. Liegt eine Änderung der gemessenen Abstandswerte vor, hat sich das Betriebsspiel verändert. Ist keine Entlastung möglich, können auch Abstandswerte bei bestimmten Lastzuständen verglichen werden. Im Fall von stochastisch veränderlichen äußeren Belastungen werden bevorzugt Mittelwerte des Abstandes zur Auswertung herangezogen. Dazu werden Messungen über einen bestimmten Messzeitraum durchgeführt, wobei darauf zu achten ist, dass die Betriebsbedingungen (Leistung, Drehzahl, Temperaturen...) vergleichbar sind und innerhalb der Messung nicht zu stark schwanken. Es können dann Mittelwerte über eine Messung, Wochen, Monate oder Jahre gebildet und verglichen werden. Werden zusätzlich auch die Betriebskräfte gemessen (bei Windkraftanlagen z.B. die Blattlasten) werden diese bevorzugt zusätzlich bei der Auswertung berücksichtigt.

Die Aufgabe wird erfindungsgemäß weiterhin gelöst durch ein Verfahren zur Ermittlung eines Lagerspiels eines Wälzlagers bei einem Großlager mit den Merkmalen des Anspruchs 10. Die im Hinblick auf das Großlager angeführten Vorteile und bevorzugten Ausgestaltungen sind sinngemäß auch auf das Verfahren zu übertragen.

Gemäß einer bevorzugten Ausgestaltung wird dabei zur Einstellung einer Lagervorspannung bei einer Montage des Großlagers zunächst ein Abstandswert bei einer spielfreien Positionierung, einer so genannten Null-Lage erfasst und anschließend wird die Vorspannung beispielsweise mit Hilfe eines Vorspannrings aufgebracht. Durch Messung des Abstands wird diese Vorspannung überwacht und auf einen gewünschten Wert eingestellt. Die Null-Lage wird hierbei beispielsweise durch eine Zunahme der erforderlichen Drehmomente für das Verspannen des Lagerspannrings gegen einen Lagerring herangezogen. Über die hier beschriebene Abstandsmessung besteht dann die Möglichkeit, die Lagervorspannung sehr exakt einzustellen. Bei einem zunehmenden Verspannen des Lagerspannrings gegen einen Lagerring des Wälzlagers erfolgt das elastische Einfedern, was sich in der messbaren Abstandsänderung niederschlägt.

Ausführungsbeispiele der Erfindung werden nachfolgend anhand der Figuren näher erläutert. Diese zeigen:
- Fig. 1: eine teilweise Schnittansicht durch eine Hauptlagereinheit für eine Windkraftanlage, welche als eine angestellte und vorgespannte Kegelrollenlagerung ausgebildet ist,
- Fig. 2: eine vergrößerte ausschnittsweise Darstellung des in Fig. 1 dargestellten Lagers im Bereich der rechten Bildhälfte mit einer ersten Variante für die Positionierung eines Sensors,
- Fig. 3 bis 6: vergleichbare Darstellungen zu der Fig. 2 mit weiteren Varianten für die Positionierung eines jeweiligen Sensors,
- Fig. 7: eine Darstellung ähnlich der Fig. 2 mit einem austauschbar angeordneten Sensor,
- Fig. 8: eine Darstellung ähnlich Fig. 7, bei dem der Sensor über ein Exzenterelement in seiner Position verstellbar ist,
- Fig. 9: eine Darstellung ähnlich der Fig. 5 mit einer weiteren Variante der Anordnung eines Sensors,
- Fig. 10: eine ausschnittsweise Schnittdarstellung in einem Bereich ähnlich der Fig. 2 bei einem doppelreihigen Kegelrollenlager mit einem Sensor,
- Fig. 11: eine ausschnittsweise Schnittdarstellung, bei der anstelle des Kegelrollenlagers ein Rillenkugellager ausgebildet ist sowie
- Fig. 12: eine ausschnittsweise Schnittdarstellung eines Lagers mit einem Zylinderrollenlager als Loslager.

In den Figuren sind jeweils gleich wirkende Bauteile mit den gleichen Bezugszeichen versehen. Die in den Figuren dargestellten unterschiedlichen Ausführungsbeispiele können untereinander auch in beliebiger Weise miteinander kombiniert werden.

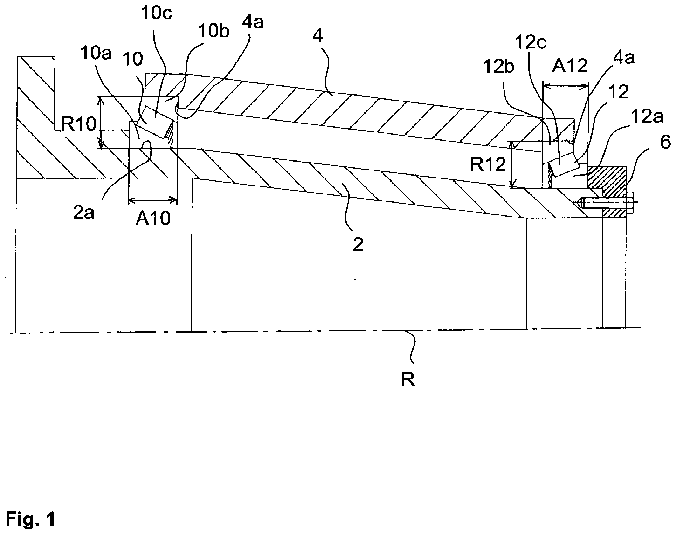

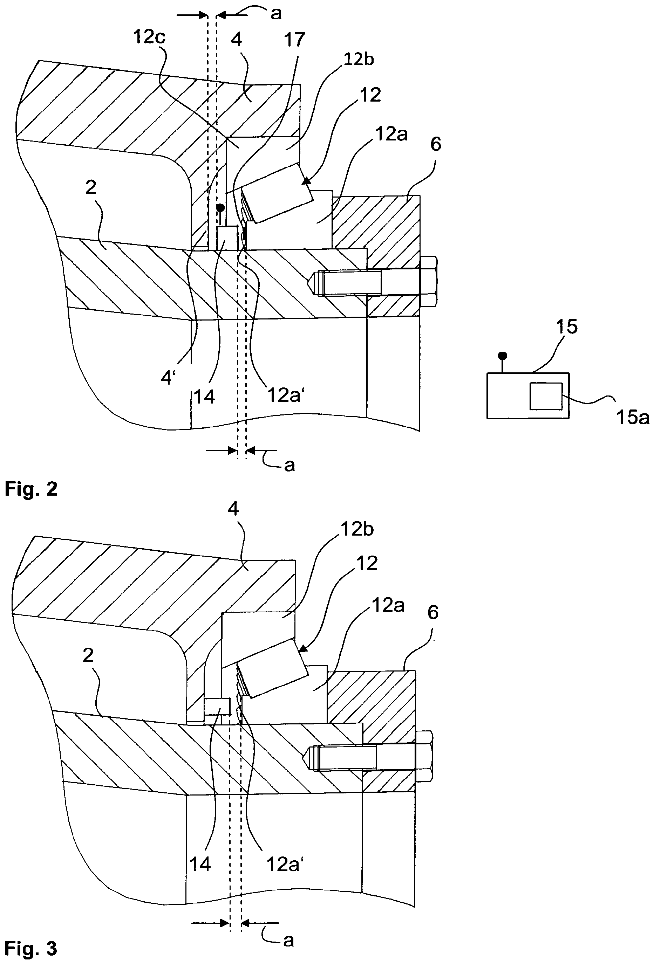

Fig. 1 zeigt eine ausschnittsweise Schnittdarstellung eines als Hauptlagereinheit ausgebildeten Großlagers 1 einer Windkraftanlage. Die Hauptlagereinheit 1 dient zur Lagerung einer Rotornabe an einem auch als Maschinenträger bezeichneten Turm der Windkraftanlage. Aufbau und Anordnung der hier ausschnittsweise dargestellten Hauptlagereinheit 1 geht zumindest in ähnlicher Ausgestaltung beispielsweise aus den Fig. 3 bis 6 der WO 2013/113487 A1 sowie auch aus den Fig. 1 und 2 der WO 2013/152850 A1 hervor. Auf deren Offenbarungsgehalt wird insofern vollumfänglich verwiesen. Die Hauptlagereinheit 1 umfasst dabei allgemein einen auch als Welle 2 bezeichneten Rotor und einen auch als Gehäuse 4 bezeichneten Stator. Die beiden sind über ein erstes Wälzlager 10 sowie ein zweites Wälzlager 12 aneinander gelagert. Im Ausführungsbeispiel handelt es sich um eine angestellte und vorgespannte Kegelrollenlagerung. Im Betrieb rotiert die Welle 2 um eine Rotationsachse R.

Jedes der Wälzlager 10,12 weist einen Innenring 10a,12a, einen Außenring 10b,12b sowie eine Vielzahl von im Ausführungsbeispiel kegelstumpfförmigen Wälzkörpern 10c, 12c auf.

Das Gehäuse 4 bildet für jedes der beiden Wälzlager 10,12 einen Lagersitz 4a für den jeweiligen Außenring 10b, 12b aus. Durch den Lagersitz 4a sind Anschlagsflächen definiert, an denen sich die Außenringe 10b, 12b sowohl in radialer als auch in axialer Richtung abstützen.

Die Welle 2 bildet demgegenüber nur für das erste Wälzlager 10 einen festen Lagersitz 2a aus. Auf der gegenüberliegenden Seite des zweiten Wälzlagers 12 ist anstelle eines festen Lagersitzes ein Klemmring 6 angeordnet, welcher mit Hilfe von Schrauben gegen den Innenring 12a verspannbar ist, so dass insgesamt die gesamte Lageranordnung über den Klemmring 6 vorgespannt werden kann.

Die radialen Anlageflächen der Innenringe 10a, 12a am jeweiligen Lagersitz 2a der Welle 2 weisen zu den radialen Anlageflächen der Außenringe 10b,12b am jeweiligen Lagersitz 4a des Gehäuses 4 jeweils einen Radialabstand R10,R12 auf. Im Falle des ersten Wälzlagers 10 weist die axiale Anlagefläche des Innenrings 10a zu der des Außenrings 10b einen Axialabstand A10 auf. Bei dem zweiten Wälzlager 12 ist der entsprechende Axialabstand A12 durch den Abstand zwischen einem Axialanschlag an der Welle 4 und einer entsprechenden Anschlagsfläche am Klemmring 6 definiert.

Diese Abstände A10,A12,R10,R12 sind jeweils charakteristisch für ein jeweiliges Lagerspiel des jeweiligen Lagers 10,12. Über diese Abstände ist daher das Lagerspiel definiert.

Die gesamte Hauptlagereinheit 1 wird als vorgespannte Hauptlagereinheit bereitgestellt, so dass also ein negatives Lagerspiel ausgebildet ist. Die Welle 2 wird über einen Flansch mit der Rotornabe und das Gehäuse 4 mit dem Maschinenträger ebenfalls über einen Flansch verbunden. Die gesamte Hauptlagereinheit 1 ist für großtechnische Windkraftanlagen mit Leistungen im Multi-Megawattbereich ausgelegt. Die Welle 2 weist dabei üblicherweise einen Durchmesser von mehreren Metern, beispielsweise von 1,5 bis 4 m auf und ist begehbar. Der axiale Abstand der beiden Lager 10,12 liegt dabei typischerweise zwischen 0,5 und 3 m. Bei größeren Hauptlagereinheiten 1 weist die Welle 2 beispielsweise einen Durchmesser größer 2,5 m und / oder einen Abstand zwischen den beiden Lagern 10,12 von größer 1,5m auf.

Nachfolgend wird das zugrunde liegende Konzept beispielhaft basierend auf der in der Fig. 1 dargestellten Hauptlagereinheit für unterschiedliche Ausführungsvarianten näher erläutert. Die unterschiedlichen, nachfolgend näher erläuterten Varianten lassen sich grundsätzlich auch auf andere Lageranordnungen übertragen.

Wie bereits erwähnt ist die Welle 2 im Gehäuse 4 über zwei als Kegelrollenlager ausgebildete Wälzlager 10,12 in O-Anordnung gelagert. Durch den Klemmring 6 wird die Lagereinheit vorgespannt, indem durch diesen auf den Innenring 12a eine Kraft in Axialrichtung ausgeübt wird. Dadurch wird der Innenring 12a in axialer Richtung verschoben.

Dies führt dazu dass die Wälzkörperkontakte elastisch einfedern und sich gleichzeitig die Welle 2 am Lager einschnürt und das Gehäuse 4 sich aufweitet. Dadurch verändern sich die Maße für die axialen und radialen Abstände A10, R10, A12, R12 der Lagerringe 10a,10b; 12a,12b. Diese Änderung der Abstände i A10, R10, A12, R12 ist daher ein Maß für die aufgebrachte Vorspannung. Die Änderung der Abstände A10, R10, A12, R12 in Abhängigkeit der aufgebrachten Vorspannung wird vorzugsweise vorab z.B. durch FEM-Berechnung bestimmt und beispielsweise in einer Tabelle hinterlegt.

Zur Ermittlung und Bestimmung einer aktuellen Vorspannung werden also durch eine Abstandsmessung zumindest einer der axialen oder radialen Abstände A10, R10, A12, R12 mittelbar bestimmt und dadurch die Vorspannung in den Lagern indirekt gemessen. Da sich die Lagerringe 10a, 10b; 12a, 12b im Querschnitt kaum verformen und auch die Welle 2 und das Gehäuse 4 nahe dem Lager kaum Verformungen im Querschnitt aufweisen, ist es möglich, die Abstandsänderung von beliebigen Punkten/Flächen der Ringe oder der angrenzenden Struktur zu messen. Dadurch ergeben sich für die mittelbare Bestimmung der der axialen und/oder radialen Abstände A10, R10, A12, R12 unterschiedliche Messanordnungen, wie sie nachfolgend erläutert werden. Bei diesen wird jeweils ein Abstand a zwischen dem Sensor 14 und einer jeweiligen Messfläche gemessen. Dieser Abstand korreliert mit zumindest einem der axialen oder radialen Abstände A10, R10, A12, R12. Aus dem gemessenen Abstand a wird entweder zunächst der korrelierte axiale oder radiale Abstand A10, R10, A12, R12 bestimmt, aus dem dann die Vorspannung abgeleitet wird, oder es wird die Vorspannung direkt aus dem gemessenen Abstand a abgeleitet. Für die Ermittlung der Vorspannung ist es dabei in der Regel ausreichend, lediglich einen Abstand a zu messen und damit nur einen der axialen / radialen Abstände A10, R10, A12, R12 zu bestimmen.

Für die Bestimmung der axialen und/oder radialen Abstände A10, R10, A12, R12 wird allgemein eine Sensoreinheit 13 eingesetzt, welche üblicherweise eine Vielzahl von Sensoren 14 sowie weiterhin eine Auswerteeinheit 15 aufweist. Die Sensoren 14 sind jeweils integraler Bestandteil der Hauptlagereinheit 1 und jeweils in unmittelbarer Nähe eines jeweiligen Wälzlagers 10,12 angeordnet, bei dem die axialen / radialen Abstände A10, R10, A12, R12 ermittelt werden sollen. Die Sensoren 14 sind dabei - wie in den Figuren dargestellt - auf der Lagerseite positioniert, an der der Klemmring 6 angeordnet ist. Alternativ oder auch in Kombination sind die Sensoren 14 an der dem Klemmring 6 gegenüberliegenden Lagerseite positioniert.

Die von den Sensoren 14 gemessenen Abstandswerte werden an die Auswerteeinheit 15 beispielsweise drahtlos oder drahtgebunden übertragen. In der Auswerteeinheit 15 erfolgt die Auswertung der übermittelten Signale, insbesondere die Auswertung der gemessenen axialen/radialen Abstände A10, R10, A12, R12. Innerhalb der Auswerteeinheit 15 ist beispielsweise eine Tabelle 15a hinterlegt mit der berechneten Korrelation zwischen den gemessenen Abständen a und der Lagervorspannung bzw. zwischen den gemessenen Abständen a und den axialen/radialen Abstände A10, R10, A12, R12 sowie deren Korrelation mit der Lagervorspannung. Die Auswerteeinheit kann dabei beispielsweise in einer übergeordneten Steuereinheit für die gesamte (Windkraft-)Anlage integriert sein.

In Figur 2 ist ein Beispiel für die Anordnung zumindest eines Sensors 14 am zweiten Wälzlager 12 gezeigt. Der Sensor 14 ist fest mit der Welle 2 verbunden und misst den Abstand a sowohl zu einer Messfläche 12a' des Innenrings 12a als auch zu einer Messfläche 4' des Gehäuses 4. Dadurch wird sowohl die axiale Abstandsänderung der beiden Lagerringe 12a, 12b zueinander, als auch eine eventuelle Relativbewegung des Innenrings 12a zur Welle 2 erfasst. Der Sensor 14 ist hierzu an der Welle 2 in einem Bereich zwischen dem Innenring 12a und einem Ringflansch des Gehäuses 4 angeordnet. An diesem radial in Richtung zur Welle 2 orientierten Ringflansch ist die Messfläche 4' ausgebildet.

In einer möglichen alternativen Ausführung dazu sind z.B. auch zwei getrennte Sensoren 14 vorgesehen oder es ist nur ein Sensor 14 angeordnet, der nur auf die Messfläche 12a' des Innenrings 12a oder nur auf die Messfläche 4' des Gehäuses 4 misst. In die Messfläche 12a' des Innenrings 12a sind vorzugsweise zusätzlich Markierungen 17 angebracht, um das Ringwandern zu überwachen. Selbstverständlich kann die Sensoranordnung aus Figur 2 sowie die Beispiele aus den folgenden Figuren in gleicher Weise am ersten Wälzlager 10 ausgeführt werden.

Figur 3 zeigt ein weiteres Beispiel zur Anordnung eines Sensors. In diesem Beispiel ist der Sensor 14 am Gehäuse 4 angebracht und misst den Abstand a zur Messfläche 12a' des Innenrings 12a. Der Sensor 14 ist hierbei am Gehäuse 4, und zwar an dem zu Fig. 2 beschriebenen Ringflansch befestigt.

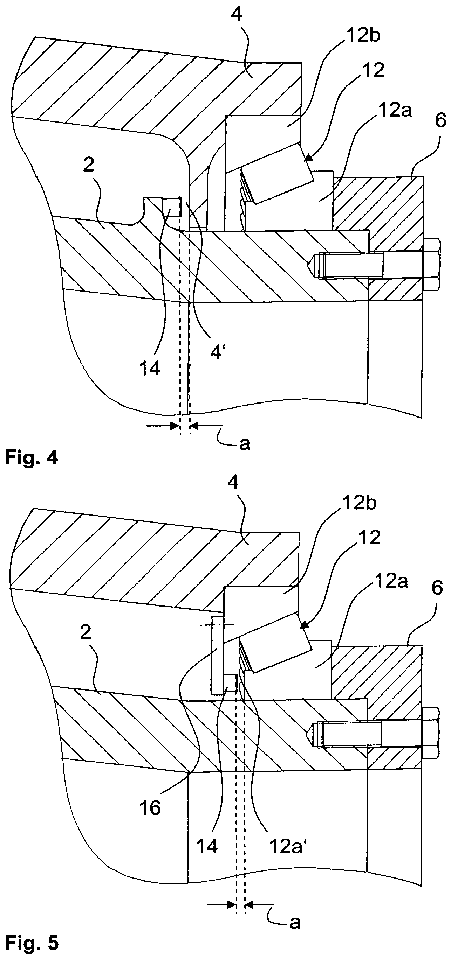

Figur 4 zeigt ein weiteres Beispiel, in dem der Sensor 14 nunmehr mit der Welle 2 verbunden ist und auf die Messfläche 4' des Gehäuses 4 misst.

Eine weitere mögliche Sensoranordnung ist in Figur 5 gezeigt. Hier ist der Sensor 14 über einen Sensorhalter 16 mit dem Außenring 12b des zweites Wälzlagers 12 verbunden und misst den Abstand zur Messfläche 12a' des Innenrings 12a. Der Sensorhalter 16 kann dabei verschiedenste Formen annehmen und beispielsweise ringförmig, stabförmig oder gebogen ausgebildet sein.

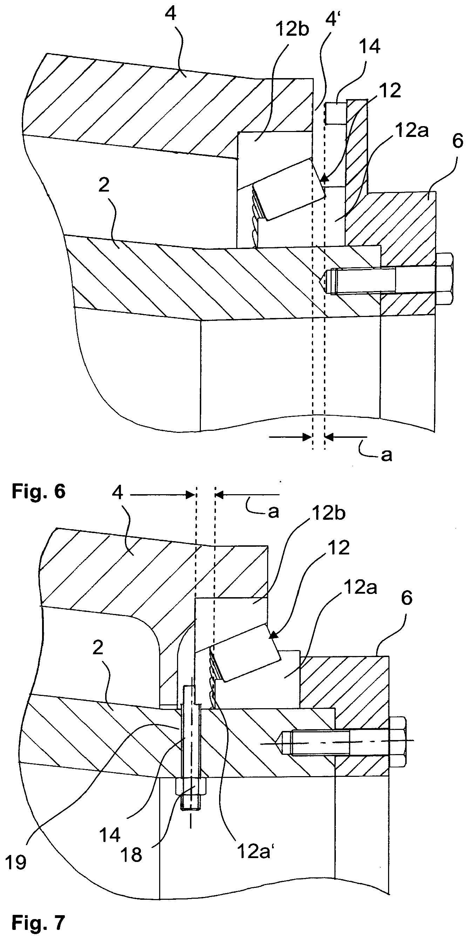

Figur 6 zeigt ein weiteres Anordnungsbeispiel. Hier ist der Sensor 14 mit dem Klemmring 6 verbunden und misst den Abstand zur Messfläche 4' des Gehäuses 4.

In Figur 7 ein besonders vorteilhaftes Beispiel einer Sensoranordnung gezeigt. In dieser Ausführungsvariante ist der Sensor 14 mit einem Gewinde versehen und in eine Aufnahme 19 der Welle 2 eingeschraubt. Der Sensor 14 ist durch eine Sicherungsmutter 18 gegen Verdrehen gesichert. Es kann beispielsweise der Abstand a zur Messfläche 12a' des Innenrings 12a gemessen werden. Diese Ausführung hat den Vorteil, dass der Sensor 14 ausgetauscht werden kann. Alternativ kann der Sensor 14 z.B. auch ohne Gewinde sondern mit zylindrischer oder kegeliger Außenfläche ausgeführt werden und z.B. durch einen Flansch, Klemmelemente oder Ähnliches an der Welle 2 befestigt werden. Derartige Ausführungen bieten ebenfalls die Möglichkeit, den Sensor 14 zu tauschen.

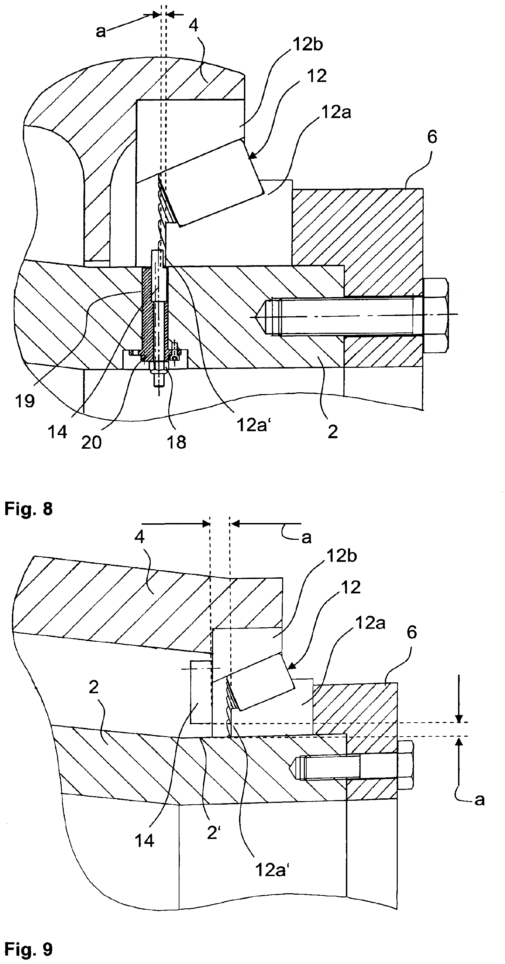

Eine weitere besonders vorteilhafte Ausführung zeigt Figur 8 In dieser Ausführung ist der Sensor 14 über eine Exzenterhülse 20 in der Welle 2 angebracht und misst auf die Messfläche 12a' des Innenrings 12a. Der Sensor 14 kann in der Exzenterhülse 20 gedreht und ausgerichtet werden und wird durch eine Sicherungsmutter 18 gegen Verdrehen gesichert. Da Sensoren 14 in der Regel einen begrenzten Messbereich haben und bei größerem Messbereich die Messgenauigkeit sinkt bzw. die Baugröße des Sensors 14 zunimmt, ist es vorteilhaft, den Messbereich möglichst klein zu halten. Dies wird über eine entsprechende Exzentervorrichtung erreicht, die zur Abstandseinstellung dient. Dadurch können Toleranzabweichungen aus der Fertigung ausgeglichen werden. Ein weiterer Vorteil einer derartigen Ausführung ist, dass der Sensor 14 ausgetauscht werden kann. Selbstverständlich kann der Sensor 14 in der Exzenterhülse 20 auch auf andere Arten wie die gezeigte montiert werden.

Figur 9 zeigt eine weitere beispielhafte Sensoranordnung. In diesem Ausführungsbeispiel ist der Sensor 14 wiederum mit dem Außenring 12b verbunden und misst sowohl in radialer Richtung auf eine Messfläche 2' an der Welle 2 als auch in axialer Richtung auf die Messfläche 12a' des Innenrings. Dadurch kann eine höhere Messgenauigkeit erzielt werden.

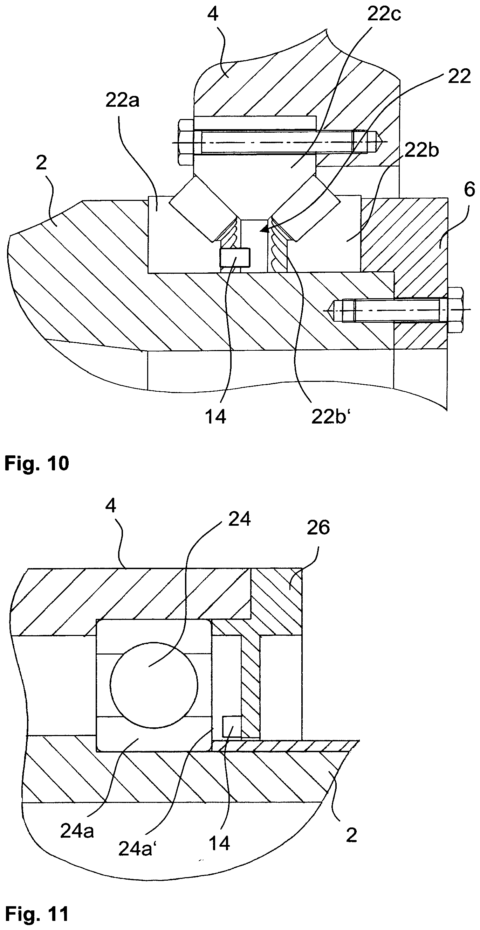

In Figur 10 ist ein Beispiel für eine mögliche Sensoranordnung bei einem doppelreihigen Kegelrollenlager 22 gegeben. In diesem Beispiel ist der Sensor 14 mit dem einen Innenring 22a verbunden und misst auf die eine Messfläche 22b' am anderen Innenring 22b' des doppelreihigen Kegelrollenlagers.

Figur 11 zeigt ein Beispiel für eine Sensoranordnung an einem Rillenkugellager 24, das als Festlager wirkt. In diesem Beispiel ist der Sensor 14 an einem Lagerdeckel 26 angebracht und misst den Abstand a zu einer Messfläche 24' des Innenrings 24a.

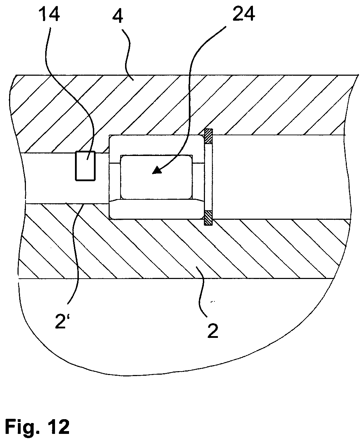

Figur 12 zeigt ein Beispiel für eine Sensoranordnung an einem Zylinderrollenlager 28 das als Loslager fungiert. Hier besteht kein Zusammenhang zwischen dem axialen Lagerringabstand und der Lagervorspannung. Aus diesem Grund ist bei dieser Lagerausführung nur die radiale Abstandsmessung vorgesehen. Der Sensor 14 ist in diesem Beispiel mit dem Gehäuse 4 verbunden und misst auf die Messfläche2' der Welle 2'.

### Bezugszeichenliste

- 1: Hauptlagereinheit
- 2: Welle
- 2': Messfläche Welle
- 2a: Lagersitz der Welle
- 4: Gehäuse
- 4': Messfläche Gehäuse
- 4a: Lagersitz des Gehäuses
- 6: Klemmring
- 10: erstes Wälzlager
- 10a: Innenring des ersten Wälzlagers
- 10b: Außenring des ersten Wälzlagers
- 10c: Wälzkörper
- 12: zweites Wälzlager
- 12a: Innenring des zweiten Wälzlagers
- 12a': Messfläche Innenring
- 12b: Außenring des zweiten Wälzlagers
- 12c: Wälzkörper
- 14: Sensor
- 15: Auswerteeinheit
- 15a: Tabelle
- 16: Sensorhalterung
- 17: Markierung
- 18: Sicherungsmutter
- 19: Aufnahme
- 20: Exzenterhülse
- 22: Doppelreihiges Kegelrollenlager
- 22a: erster Innenring
- 22b: zweiter Innenring
- 22b': Messfläche des zweiten Innenrings
- 22c: Außenring
- 24: Rillenkugellager
- 24a: Innenring Rillenkugellager
- 26: Lagerdeckel
- 28: Zylinderrollenlager
- A10: Axialer Abstand der Lagerringe von erstem Wälzlager
- R10: Radialer Abstand der Lagerringe von erstem Wälzlager
- A12: Axialer Abstand der Lagerringe von zweitem Wälzlager
- R12: Radialer Abstand der Lagerringe von zweitem Wälzlager
- R: Rotationsachse
- a: Abstand

## Patentansprüche

1. Großlager (1), insbesondere Hauptlager (1) einer Windkraftanlage, mit einem Rotor (2) sowie mit einem Stator (4), die über zumindest ein Wälzlager (10,12) aneinander gelagert sind, wobei zwei Bauteile (2,4,12a,12b) in Abhängigkeit eines Lagerspiels des Wälzlagers relativ zueinander positioniert sind, wobei
eine Sensoreinheit (14,15) vorgesehen ist mit zumindest einem Sensor (14), der an einem der Bauteile (2,4,12a,12b) angeordnet ist zur Messung eines Abstands (a) zwischen den beiden Bauteilen (2,4,12a,12b) und dass die Sensoreinheit (14,15) weiterhin zur Ermittlung eines negativen Lagerspiels basierend auf dem gemessenen Abstand (a) ausgebildet ist und dass die Sensoreinheit eine Auswerteeinheit (15) umfasst, die derart ausgebildet ist, dass in Abhängigkeit des Abstands (a) eine Lagervorspannung bestimmt wird, wobei die Auswerteeinheit (15) für die Bestimmung der Lagervorspannung derart ausgebildet ist, dass sie auf eine hinterlegte oder berechnete Korrelation zwischen dem Abstand (a) und der Lagervorspannung zurückgreift, und wobei am Rotor (2) oder am Stator (4) eine Messfläche (2',4',12a') ausgebildet ist und der Sensor (14) gegenüberliegend zur Messfläche (2',4',12a') am Stator (4) bzw. Rotor (2) angeordnet ist.

2. Großlager (1) nach dem vorhergehenden Anspruch,
**dadurch gekennzeichnet,**
**dass** der Sensor (14) gleichzeitig einen radialen als auch einen axialen Abstand (a) erfasst.

3. Großlager (1) nach einem der vorhergehenden Ansprüche,
**dadurch gekennzeichnet,**
**dass** um einen Umfang des Wälzlagers (10,12) verteilt mehrere Sensoren (14) angeordnet sind.

4. Großlager (1) nach einem der vorhergehenden Ansprüche,
**dadurch gekennzeichnet,**
**dass** der Sensor (14) austauschbar insbesondere in einer Aufnahme (19) befestigt ist.

5. Großlager (1) nach einem der vorhergehenden Ansprüche,
**dadurch gekennzeichnet,**
**dass** eine Einstelleinrichtung vorgesehen ist, über die die Position des Sensors (14) bezüglich einer Messfläche (2',4',12a') einstellbar ist, wobei die Einstelleinrichtung insbesondere ein Exzenterelement (20) umfasst und der Sensor (14) durch Drehen des Exzenterelements (20) verstellbar ist.

6. Großlager (1) nach einem der vorhergehenden Ansprüche,
**dadurch gekennzeichnet,**
**dass** die Sensoreinheit (14,15) ergänzend zur Überwachung eines Ringwanderns zumindest eines Lagerrings (12a) des Wälzlagers (12) ausgebildet ist und hierzu vorzugsweise eine Markierung (17) auf einer dem zu überwachenden Lagerring (12a) zugeordneten Messfläche (12a') angebracht ist.

7. Großlager (1) nach einem der vorhergehenden Ansprüche,
**dadurch gekennzeichnet,**
**dass** die Sensoreinheit (14,15) zur Erfassung von Umgebungsparametern, insbesondere zur Temperaturerfassung ausgebildet ist und einen erfassten Wert des Umgebungsparameters für die Ermittlung des Lagerspiels berücksichtigt.

8. Großlager (1) nach einem der vorhergehenden Ansprüche,
**dadurch gekennzeichnet,**
**dass** die Sensoreinheit (14,15) zur dauerhaften Abstandsmessung und Überwachung des Lagerspiels des Wälzlagers (10,12) im laufenden Betrieb ausgebildet ist.

9. Großlager (1) nach dem vorhergehenden Anspruch,
**dadurch gekennzeichnet,**
**dass** die Sensoreinheit (14,15) derart ausgebildet ist, dass während des laufenden Betriebs auftretende äußere Belastungen bei der Ermittlung des Lagerspiels berücksichtig werden.

10. Verfahren zur Ermittlung eines Lagerspiels eines Wälzlagers (10,12) bei einem Großlager (1), insbesondere bei einem Hauptlager (1) einer Windkraftanlage, welches einen Rotor (2) sowie einen Stator (4) aufweist, die über das zumindest eine Wälzlager (10,12) aneinander gelagert sind, wobei zwei Bauteile (2,4,12a,12b) in Abhängigkeit des Lagerspiels des Wälzlagers (10,12) relativ zueinander positioniert sind, wobei mit Hilfe einer Sensoreinheit (14,15), die zumindest einen Sensor (14) umfasst, welcher an einem der Bauteile (2,4,12a,12b) angeordnet ist, ein Abstand (a) zwischen den beiden Bauteilen (2,4,12a,12b) gemessen und hieraus ein negatives Lagerspiel sowie eine Lagervorspannung ermittelt wird, wobei hierzu am Rotor (2) oder am Stator (4) eine Messfläche (2',4',12a') ausgebildet ist und der Sensor (14) gegenüberliegend zur Messfläche (2',4',12a') am Stator (4) bzw. Rotor (2) angeordnet ist und auf eine hinterlegte oder berechnete Korrelation zwischen dem Abstand (a) und der Lagervorspannung zurückgegriffen wird.

11. Verfahren nach dem vorhergehenden Anspruch,
**dadurch gekennzeichnet,**
**dass** zur Einstellung einer Lagervorspannung bei einer Montage zunächst ein Abstand (a) bei spielfreier Positionierung erfasst, anschließend die Vorspannung aufgebracht und durch Messung des Abstands (a) überwacht und auf einen gewünschten Wert eingestellt wird.

12. Verfahren nach einem der Ansprüche 10 oder 11,
**dadurch gekennzeichnet,**
**dass** eine Überwachung des Lagerspiels im laufenden Betrieb erfolgt.

13. Windkraftanlage mit einem Großlager (1) nach einem der Ansprüche 1 bis 9.

## Claims

1. Large bearing (1), in particular a main bearing (1), for a wind power plant, having a rotor (2) and a stator (4), which are mounted one on top of the other over at least one rolling bearing (10, 12), wherein two components (2, 4, 12a, 12b) are positioned relative to one another depending on a bearing clearance of the rolling bearing, wherein
a sensor unit (14, 15) is provided with at least one sensor (14) which is arranged on one of the components (2, 4, 12a, 12b) to measure a distance (a) between the two components (2, 4, 12a, 12b), and the sensor unit (14, 15) is furthermore designed to determine a negative bearing clearance based on the measured distance (a), and the sensor unit comprises an evaluation unit (15), which is formed in such a way that, depending on the distance (a), a bearing preload is determined, wherein the evaluation unit (15) for the determination of the bearing preload is formed in such a way that it refers to a stored or calculated correlation between the distance (a) and the bearing preload, and wherein a measuring surface (2', 4', 12a') is formed on the rotor (2) or on the stator (4) and the sensor (14) is arranged opposite the measuring surface (2', 4', 12a') on the stator (4) or the rotor (2).

2. Large bearing (1) according to the preceding claim,
**characterised in that**,
the sensor (14) detects both a radial and an axial distance (a) simultaneously.

3. Large bearing (1) according to one of the preceding claims,
**characterised in that**,
several sensors (14) are arranged distributed around a periphery of the rolling bearing (10, 12).

4. Large bearing (1) according to one of the preceding claims,
**characterised in that**,
the sensor (14) is exchangeably fastened, in particular in a receiver (19).

5. Large bearing (1) according to one of the preceding claims,
**characterised in that**,
an adjusting means is provided, via which the position of the sensor (14) relative to a measuring surface (2', 4', 12a') is adjustable, wherein the adjusting means comprises in particular an eccentric element (20) and the sensor (14) is adjustable by turning the eccentric element (20).

6. Large bearing (1) according to one of the preceding claims,
**characterised in that**,
the sensor unit (14, 15) is designed to be complementary to the monitoring of ring migration of at least one bearing ring (12a) of the rolling bearing (12), and to this end a marking (17) is preferably applied to a measuring surface (12a') assigned to monitor the bearing ring (12a).

7. Large bearing (1) according to one of the preceding claims,
**characterised in that**,
the sensor unit (14, 15) is designed for measuring environmental parameters, in particular for measuring temperature, and considers a recorded value of the environmental parameter for the determination of the bearing clearance.

8. Large bearing (1) according to one of the preceding claims,
**characterised in that**,
the sensor unit (14, 15) is designed for lasting distance measurement and monitoring of the bearing clearance of the rolling bearing (10, 12) during operation.

9. Large bearing (1) according to one of the preceding claims,
**characterised in that**,
the sensor unit (14, 15) is designed in such a way that, during operation, external stresses that occur are taken into account during determination of the bearing clearance.

10. Method for determining a bearing clearance of a rolling bearing (10, 12) in a large bearing (1), in particular a main bearing (1) for a wind power plant, which has a rotor (2) and a stator (4), which are mounted one on top of the other over the at least one rolling bearing (10, 12), wherein two components (2, 4, 12a, 12b) are positioned relative to one another depending on the bearing clearance of the rolling bearing (10, 12), wherein, with the aid of a sensor unit (14, 15) which comprises at least one sensor (14), which is arranged on one of the components (2, 4, 12a, 12b), a distance (a) between the two components (2, 4, 12a, 12b) is measured and, from this, a negative bearing clearance and a bearing preload are determined, wherein a measuring surface (2', 4', 12a') is formed for this purpose on the rotor (2) or on the stator (4) and the sensor (14) is arranged opposite the measuring surface (2', 4', 12a') on the stator (4) or the rotor (2) and refers to a stored or calculated correlation between the distance (a) and the bearing clearance.

11. Method according to the preceding claim,
**characterised in that**,
for the adjustment of a bearing clearance during an assembly, firstly a distance (a) is detected when it is positioned without clearance, then the preload is applied and, by measuring the distance (a), is monitored and set to a desired value.

12. Method according to one of claims 10 or 11,
**characterised in that**,
monitoring of the bearing clearance is carried out during operation.

13. Wind power plant having a large bearing (1) according to one of claims 1 to 9.

## Revendications

1. Palier de grande taille (1), notamment palier principal (1) d'une éolienne, comprenant un rotor (2) ainsi qu'un stator (4), qui sont montés rotatifs l'un par rapport à l'autre par l'intermédiaire d'au moins un palier à roulement (10, 12),
palier de grande taille dans lequel
deux pièces constitutives (2, 4, 12a, 12b) sont positionnées relativement l'une par rapport à l'autre en fonction d'un jeu de palier du palier à roulement,
il est prévu une unité de capteur (14, 15) comprenant au moins un capteur (14), qui est agencé sur l'une des pièces constitutives (2, 4, 12a, 12b) pour mesurer une distance d'espacement (a) entre les deux pièces constitutives (2, 4, 12a, 12b), et l'unité de capteur (14, 15) est par ailleurs conçue pour déterminer un jeu de palier négatif, sur la base de la distance d'espacement (a) mesurée, et l'unité de capteur comprend une unité de traitement de données (15), qui est configurée pour pouvoir déterminer une précontrainte de palier en fonction de ladite distance d'espacement (a),
l'unité de traitement de données (15), pour déterminer la précontrainte de palier, est configurée pour utiliser à cet effet une corrélation mémorisée ou calculée entre la distance d'espacement (a) et la précontrainte de palier,
et une surface de mesure (2', 4', 12a') est formée sur le rotor (2) ou sur le stator (4), et le capteur (14) est agencé en regard de la surface de mesure (2', 4', 12a'), sur le stator (4) respectivement sur le rotor (2) .

2. Palier de grande taille (1) selon la revendication 1,
**caractérisé**
**en ce que** le capteur (14) relève simultanément une distance d'espacement (a) aussi bien radiale qu'axiale.

3. Palier de grande taille (1) selon l'une des revendications précédentes,
**caractérisé**
**en ce que** plusieurs capteurs (14) sont agencés de manière répartie autour d'une périphérie du palier à roulement (10, 12).

4. Palier de grande taille (1) selon l'une des revendications précédentes,
**caractérisé**
**en ce que** le capteur (14) est fixé de manière interchangeable, notamment dans un logement d'accueil (19) .

5. Palier de grande taille (1) selon l'une des revendications précédentes,
**caractérisé**
**en ce qu'**il est prévu un dispositif de réglage, par l'intermédiaire duquel il est possible de régler la position du capteur (14) par rapport à une surface de mesure (2', 4', 12a'), le dispositif de réglage comprenant notamment un élément d'excentrique (20), et le capteur (14) pouvant être réglé par rotation de l'élément d'excentrique (20).

6. Palier de grande taille (1) selon l'une des revendications précédentes,
**caractérisé**
**en ce que** l'unité de capteur (14, 15) est de manière complémentaire conçue pour surveiller un déplacement de bague d'au moins une bague de roulement (12a) du palier à roulement (12), et à cet effet il est de préférence prévu un marquage (17) sur une surface de mesure (12a') associée à la bague de roulement (12a) à surveiller.

7. Palier de grande taille (1) selon l'une des revendications précédentes,
**caractérisé**
**en ce que** l'unité de capteur (14, 15) est configurée pour relever des paramètres d'environnent, notamment pour relever la température, et prend en considération la valeur relevée du paramètre d'environnement pour la détermination du jeu de palier.

8. Palier de grande taille (1) selon l'une des revendications précédentes,
**caractérisé**
**en ce que** l'unité de capteur (14, 15) est configurée pour assurer une mesure permanente de la distance d'espacement et une surveillance permanente du jeu de palier du palier à roulement (10, 12) pendant le fonctionnement continu.

9. Palier de grande taille (1) selon l'une des revendications précédentes,
**caractérisé**
**en ce que** l'unité de capteur (14, 15) est configurée de manière à ce que des charges extérieures apparaissant au cours du fonctionnement continu, soient prise en considération dans la détermination du jeu de palier.

10. Procédé de détermination d'un jeu de palier d'un palier à roulement (10, 12) dans un palier de grande taille (1), notamment dans un palier principal (1) d'une éolienne, qui comprend un rotor (2) ainsi qu'un stator (4), qui sont montés rotatifs l'un par rapport à l'autre par l'intermédiaire d'au moins un palier à roulement (10, 12), deux pièces constitutives (2, 4, 12a, 12b) étant positionnées relativement l'une par rapport à l'autre en fonction d'un jeu de palier du palier à roulement (10, 12), procédé d'après lequel à l'aide d'une unité de capteur (14, 15), qui comprend au moins un capteur (14) agencé sur l'une des pièces constitutives (2, 4, 12a, 12b), on mesure une distance d'espacement (a) entre les deux pièces constitutives (2, 4, 12a, 12b), et on détermine à partir de là un jeu de palier négatif ainsi qu'une précontrainte de palier, une surface de mesure (2', 4', 12a') étant à cet effet formée sur le rotor (2) ou sur le stator (4), et le capteur (14) étant agencé en regard de la surface de mesure (2', 4', 12a'), sur le stator (4) respectivement sur le rotor (2), et on utilise une corrélation mémorisée ou calculée entre la distance d'espacement (a) et la précontrainte de palier.

11. Procédé selon la revendication précédente,
**caractérisé**
**en ce que** pour régler une précontrainte de palier lors d'un montage, on relève tout d'abord une distance d'espacement (a) pour un positionnement exempt de jeu, on applique ensuite la précontrainte et on la surveille et on la règle à une valeur souhaitée par mesure de la distance d'espacement (a).

12. Procédé selon l'une des revendications 10 ou 11,
**caractérisé**
**en ce qu'**une surveillance du jeu de palier est assurée en cours de fonctionnement continu.

13. Eolienne comprenant un palier de grande taille (1) selon l'une des revendications 1 à 9.
